# EUROPÄISCHE PATENTSCHRIFT

(11) **EP 1 655 819 B1**
(45) Veröffentlichungstag und Bekanntmachung des Hinweises auf die Patenterteilung: **15.08.2007**
(21) Anmeldenummer: 05023097.8
(22) Anmeldetag: 22.10.2005
(51) Int. Cl.: H02K 5/04

(54) **Elektromotor**
Electric motor
Moteur électrique

(30) Priorität: 09.11.2004 DE 102004054308
(43) Veröffentlichungstag der Anmeldung: 10.05.2006
(73) Patentinhaber: Franklin Electric Europa GmbH, 54516 Wittlich (DE)
(72) Erfinder: Klippel, Peter, 54484 Maring-Noviand (DE)
(74) Vertreter: Serwe, Karl-Heinz

(56) Entgegenhaltungen:
- EP-A- 1 202 434
- DE-U1- 8 121 936
- FR-A- 807 191
- GB-A- 799 382
- US-A- 4 703 209

## Beschreibung

Die Erfindung betrifft einen Elektromotor mit einem zylinderförmigen Gehäuse, mit einem zylinderförmigen Statorpaket und mit einer Abstandshülse, wobei das Statorpaket in das Gehäuse eingeschoben ist und an einem Ende durch einen Anschlag und am anderen Ende durch die Abstandshülse im Gehäuse festgelegt ist, mit einer Lagerschale, die die Abstandshülse hält und die im Gehäuse festgelegt ist.

Aus der GB 799 382 A ist ein Elektromotor mit den oben genannten Merkmalen bekannt. Bei diesem Elektromotor ist zum Ausgleich von Längentoleranzen zwischen Statorpaket und Lagerschale ein Ring vorgesehen, der in Hülsenlängsrichtung teilweise oder vollständig zusammengepresst ist.

Die Aufgabe der Erfindung besteht darin, einen Elektromotor anzugeben, bei dem Längentoleranzen auf eine andere Art und Weise ausgeglichen werden. Dazu wird vorgeschlagen, dass die Abstandshülse an ihrem dem Statorpaket abgewandten Endabschnitt wellenförmige, nach außen offene, in Hülsenlängsrichtung zusammenpressbare Umfangsrillen aufweist, die zum Ausgleich von Längentoleranzen zwischen Statorpaket und Lagerschale in Hülsenlängsrichtung teilweise oder vollständig zusammengepresst sind.

Vorteilhaft ist der Querschnitt der wellenförmigen Umfangsrillen etwa halbkreisförmig ausgebildet. Vorzugsweise hat die Abstandshülse an ihrem dem Statorpaket abgewandten Endabschnitt vor den wellenförmigen Umfangsrillen eine Umfangsrille mit rechteckigem Querschnitt.

Die Tiefe der rechteckigen Umfangsrille beträgt etwa die Hälfte der Tiefe der wellenförmigen Umfangsrillen.

Bei einer vorteilhaften Ausführungsform ist die Abstandshülse in Hülsenlängsrichtung geschlitzt.

Die Erfindung ist in den Zeichnungen beispielhaft dargestellt.

### Es zeigen:

- Fig. 1: einen Elektromotor in teilweisem Längsschnitt,
- Fig. 2: eine Hülse in Seitenansicht und
- Fig. 3: die Hülse nach Fig. 2 in Draufsicht.

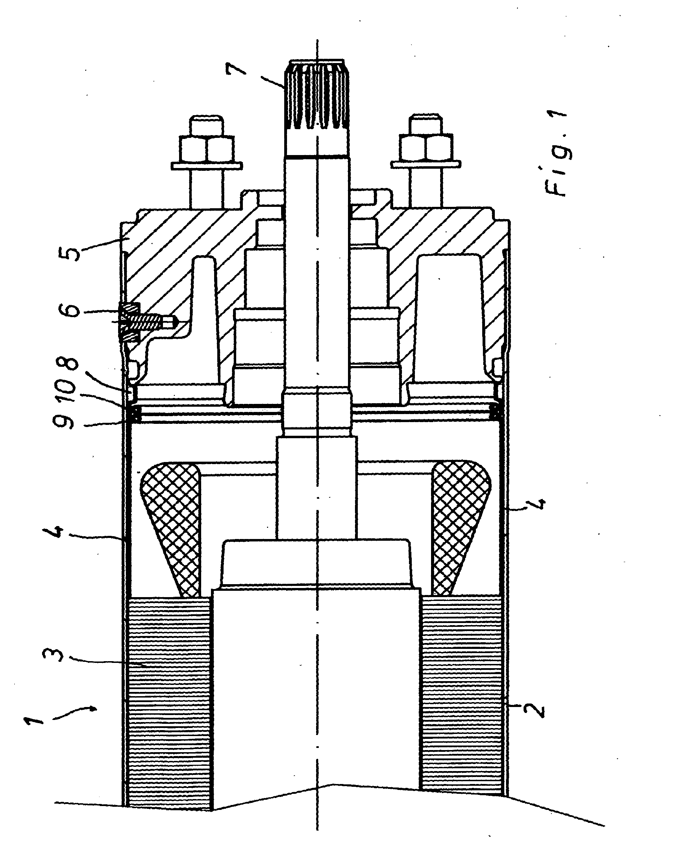

Nach Fig. 1 hat ein Elektromotor 1, insbesondere für Unterwassereinsätze, ein zylinderförmiges Gehäuse 2, in dem ein zylinderförmiges Statorpaket 3 eingesetzt ist. Das Statorpaket 3 wird durch eine Abstandshülse 4 festgelegt, die von einer in das Gehäuse 2 eingesetzten Lagerschale 5 gehalten ist. Die Lagerschale 5 ist mittels Schrauben 6 im Gehäuse 2 festgelegt. Die Lagerschale 5 lagert die Rotorwelle 7.

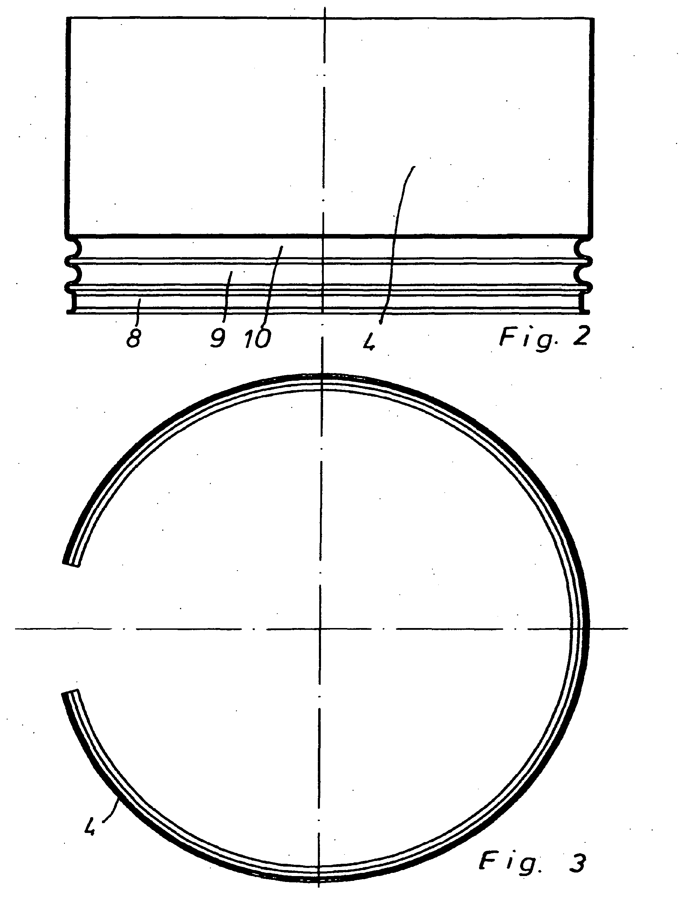

Wie die Figuren 2 und 3 zeigen, hat die Abstandshülse 4 an ihrem Endabschnitt eine im Querschnitt rechteckige, nach außen offene Umfangsrille 8, an die sich zwei im Querschnitt etwa halbkreisförmige, nach außen offene, wellenförmige Umfangsrillen 9 und 10 anschließen. Wie die Fig. 2 weiter zeigt, beträgt die Tiefe der rechteckigen Umfangsrille 8 etwa die Hälfte der Tiefe der wellenförmigen Umfangsrillen 9 und 10.

Die Fig. 3 zeigt, dass die Abstandshülse 4 in Hülsenlängsrichtung geschlitzt ist.

Bei dem Zusammenbau des Elektromotors 1 wird das Statorpaket 3 in das Gehäuse 2 bis zu einem nicht dargestellten Anschlag eingeschoben. Anschließend wird die Abstandshülse 4 derart in das Gehäuse 2 eingeschoben, dass die Umfangsrillen 8 bis 10 dem Statorpaket 3 abgewandt sind.

Durch Druck auf das Ende der Abstandshülse 4 werden anschließend zum Ausgleich der vorhandenen Längentoleranzen die wellenförmigen Umfangsrillen 9 und 10 in Hülsenlängsrichtung entsprechend zusammenpresst, wie dies die Fig. 1 zeigt.

Die Umfangsrille 8 mit rechteckigem Querschnitt wird wegen ihrer Form nicht zusammengepresst und bietet somit für das Presswerkzeug und die Lagerschale 5 einen sicheren Sitz.

Zur Demontage des Elektromotors 1 kann nach Entfernen der Lagerschale 5 die geschlitzte Abstandshülse 4 zusammengepresst werden, so dass sie leicht aus dem Gehäuse 2 entfernt werden kann.

## Patentansprüche

1. Elektromotor mit einem zylinderförmigen Gehäuse (2), mit einem zylinderförmigen Statorpaket (3), mit einer Abstandshülse (4), wobei das Statorpaket in das Gehäuse eingeschoben ist und an einem Ende durch einen Anschlag und am anderen Ende durch die Abstandshülse im Gehäuse festgelegt ist, mit einer Lagerschale (5), die die Abstandshülse hält und die im Gehäuse festgelegt ist, **dadurch gekennzeichnet, dass** die Abstandshülse an ihrem dem Statorpaket abgewandten Endabschnitt wellenförmige, nach aussen offene, in Hülsenlängsrichtung zusammenpressbare Umfangsrillen (9, 10) aufweist, die zum Ausgleich von Längentoleranzen zwischen Statorpaket und Lagerschale in Hülsenlängsrichtung teilweise oder vollständig zusammengepresst sind.

2. Elektromotor nach Anspruch 1, **dadurch gekennzeichnet, dass** der Querschnitt der wellenförmigen Umfangsrillen (9, 10) etwa halbkreisförmig ausgebildet ist.

3. Elektromotor nach Anspruch 1 oder 2, **dadurch gekennzeichnet, dass** die Abstandshülse (4) an ihrem dem Statorpaket (3) abgewandten Endabschnitt vor den wellenförmigen Umfangsrillen (9, 10) eine Umfangsrille (8) mit rechteckigem Querschnitt hat.

4. Elektromotor nach Anspruch 3, **dadurch gekennzeichnet, dass** die Tiefe der rechteckigen Umfangsrille (8) etwa die Hälfte der Tiefe der wellenförmigen Umfangsrillen (9, 10) beträgt.

5. Elektromotor nach einem der Ansprüche 1 bis 4, **dadurch gekennzeichnet, dass** die Abstandshülse (4) in Hüllenlängsrichtung geschlitzt ist.

## Claims

1. Electromotor with a cylindrical housing (2), with a cylindrical stator pack (3), with a spacer tube (4), whereby the stator pack is inserted into the housing and is locked at one end by an abutment means and, at the other end, is fixed by the spacer tube, and with a bushing (5) that holds the spacer tube and that is attached in the housing, **characterized in that**, the spacer tube has, on its end section facing the stator pack, waveform peripheral grooves (9, 10) that can be compressed in the longitudinal direction of the tube, the said peripheral grooves (9, 10) being partially or fully compressed in the longitudinal direction of the tube in order to balance permissible variation in length between the stator pack and the bushing.

2. Electromotor in accordance with claim 1, **characterized in that** the cross-sectional form of the waveform peripheral grooves (9, 10) is roughly semicircular.

3. Electromotor in accordance with claim 1 or 2, **characterized in that** the spacer tube (4) has a peripheral groove (8), with a rectangular cross-section, in front of the waveform peripheral grooves (9, 10).

4. Electromotor in accordance with claim 3, **characterized in that** the depth of the rectangular peripheral groove (8) is approximately half the depth of the waveform peripheral grooves (9, 10).

5. Electromotor in accordance with one of claims 1 to 4, **characterized in that** the spacer tube (4) is slotted in the longitudinal direction of the tube.

## Revendications

1. Moteur électrique comportant un carter cylindrique (2), un ensemble stator (3) cylindrique, une douille d'écartement (4), l'ensemble stator étant glissé dans le carter et immobilisé dans celui-ci à une de ses extrémités par une butée et à l'autre extrémité par la douille d'écartement, et comportant un coussinet (5), qui maintient la douille d'écartement et est immobilisé dans le carter, **caractérisé en ce que** la douille d'écartement comporte, dans sa portion d'extrémité détournée de l'ensemble stator, des rainures périphériques (9, 10) ondulées, ouvertes vers l'extérieur et compressibles selon la direction longitudinale de la douille, qui sont comprimées en partie ou entièrement entre l'ensemble stator et le coussinet selon la direction longitudinale de la douille, pour compenser des tolérances de longueurs.

2. Moteur électrique selon la revendication 1, **caractérisé en ce que** la section transversale des rainures périphériques ondulées (9, 10) est sensiblement semi-circulaire.

3. Moteur électrique selon la revendication 1 ou 2, **caractérisé en ce que** la douille d'écartement (4) comporte, sur sa portion d'extrémité détournée de l'ensemble stator (3), en amont des rainures périphériques ondulées (9, 10), une rainure périphérique (8) à section rectangulaire.

4. Moteur électrique selon la revendication 3, **caractérisé en ce que** la rainure rectangulaire périphérique (8) est environ deux fois moins profonde que les rainures périphériques ondulées (9, 10).

5. Moteur électrique selon l'une des revendications 1 à 4, **caractérisé en ce que** la douille d'écartement (4) est fendue selon sa direction longitudinale.
